# EUROPEAN PATENT APPLICATION

(11) **EP 4 474 274 A1**
(43) Date of publication of application: **11.12.2024**
(21) Application number: 23177476.1
(22) Date of filing: 06.06.2023
(51) Int. Cl.: B64D 11/00, B64D 11/06, B60N 2/02, B60N 3/00

(54) **PASSENGER SEAT ARRANGEMENT WITH WIRELESS CHARGING PAD, AND PASSENGER AIRCRAFT HAVING SUCH A PASSENGER SEAT ARRANGEMENT**

(71) Applicant: KID-Systeme GmbH, 21614 Buxtehude (DE)
(72) Inventor: ZACHÄUS, Matthias, 21614 Buxtehude (DE); HOESMANN, Holger, 21614 Buxtehude (DE)
(74) Representative: Isarpatent

(57) **Abstract**

A passenger seat arrangement for a passenger aircraft (A) comprises a passenger seat assembly (10) having at least one passenger seat with a seat supporting frame and a backrest (2), and a wireless charging system (30) integrated into the backrest (2). The wireless charging system (30) includes a PED holder (9a; 9b) having an assembly (8) of permanent magnets embedded within the PED holder (9a; 9b) configured to a physically hold a PED (P) on the PED holder (9a; 9b) in place, and a charging pad (7) configured to electromagnetically transfer power to a PED (P) held on the PED holder (9a; 9b).

## Description

### TECHNICAL FIELD OF THE INVENTION

The invention relates to a seat arrangement for passengers with a wireless charging station for charging personal electronic devices (PEDs), to a passenger aircraft having such a seat arrangement, and to a method for wirelessly supplying energy to a PED at a passenger seat arrangement in a passenger aircraft.

### TECHNICAL BACKGROUND

Nowadays, personal electronic devices (PEDs) are ubiquitous. Normally, these PEDs are carried with the user wherever he travels, even on board of aircraft. For the comfort of the passengers, it is desirable to offer the passengers on board of an aircraft the option to charge the electrical energy stores of the PEDs during their time on board the aircraft or to keep the PEDs in mains operation. Airlines generally offer charging facilities for PEDs such as laptops, mobile telephones, smartphones, tablet PCs and the like, in which USB ports or mains ports are used for each passenger individually at their respective aircraft seat. For the local supply of electrical consumers - both fixedly installed and also mobile devices such as PEDs - on board an aircraft, locally installed power distribution systems having power converters are used, to which a plurality of electrical consumers with different power requirements can be connected.

In some cases, PEDs may be recharged by coupling a charging interface of the PED to a power source by means of a physical connection of electrically conductive material, for example a charging cable. However, this manner of charging necessitates the PED to be in the spatial vicinity of the structural tether to a charging outlet and requires the PED to have a cabling receptacle or other type of connector to mate with a corresponding plug or connector of the charging cable.

Another possibility is to utilize wireless charging technologies, like for example the Qi standard, that enable to charge PEDs with suitable wireless interfaces to be charged inductively. Such wireless charging technologies allow compatible devices, such as smartphones or tablets, to charge their electrical energy storages through an airbound transmission channel by electromagnetic induction when placed on a charging pad over which energy may be inductively transferred to distances up to several centimeters. For example, some PEDs may be recharged by merely resting the PED on the surface of a corresponding charging pad of a charging station. An alternating current sent through a transmitter coil disposed below the surface of the charging pad produces temporally changing magnetic flux which in turn induces an electric current in a corresponding receiver coil in the PED. The induced electric current then charges the electrical energy storages within the PED.

The document US 2021/0099027 A1 discloses magnetic alignment components and systems that facilitate establishing and maintaining a desired alignment between different devices for purposes of enabling efficient wireless power transfer between the devices. The document US 2022/0416590 A1 discloses a bimodal annular magnetic alignment component included in an electronic device that attaches to other electronic devices using a magnetic alignment system. The document CN 215 990 333 U discloses a wireless electromagnetism location structure for a wireless charger to improve the accurate location between the wireless charging coils and thereby the wireless charging efficiency. The document EP 3 816 050 A1 discloses an aircraft passenger seat apparatus having a seatback bezel disposed in a rear surface of an aircraft seatback and an accessory station for receiving and coupling accessories such as a phone holder. The document EP 3 129 286 A1 discloses aircraft passenger seat assemblies with a passenger seat and a component with an outer surface attached the passenger seat, the component housing an inductive wireless power unit with a coil assembly. The document US 2021/0387556 A1 discloses a portable device holding terminal for a vehicle seat having wireless charging capabilities.

### SUMMARY OF THE INVENTION

One of the objects of the invention is to find improved and more comfortable solutions for wirelessly supplying energy to personal electronic device of passengers in a passenger aircraft, while simultaneously enabling passengers to keep the personal electronic device in use.

This and other objects are achieved by means of a passenger seat arrangement having the features of Claim 1, a passenger aircraft having the features of Claim 12 and a method for wirelessly supplying energy to a personal electronic device at a passenger seat arrangement in a passenger aircraft, the method having the features of Claim 15.

According to a first aspect of the invention, a passenger seat arrangement for a passenger aircraft comprises a passenger seat assembly having at least one passenger seat with a seat supporting frame and a backrest, and a wireless charging system integrated into the backrest. The wireless charging system includes a PED holder having an assembly of permanent magnets embedded within the PED holder configured to a physically hold a PED on the PED holder in place, and a charging pad configured to electromagnetically transfer power to a PED held on the PED holder.

According to a second aspect of the invention, a passenger aircraft comprises at least one passenger seat arrangement according to the first aspect of the invention. The passenger aircraft comprises may in some embodiments further comprise at least one electrical energy source. In some implementations thereof, the passenger aircraft may further comprise at least one energy supply system associated with the at least one passenger seat arrangement. The at least one energy supply system may in various embodiments be configured to drive the charging pad of the wireless charging system with electric current.

According to a third aspect of the invention, a method for wirelessly supplying energy to a personal electronic device at a passenger seat arrangement in a passenger aircraft comprises the steps of integrating a wireless charging system into the backrest of a passenger seat with a seat supporting frame in a passenger seat assembly of the passenger seat arrangement; placing a PED on a PED holder having an assembly of permanent magnets embedded within the PED holder, physically holding the PED on the PED holder in place; and electromagnetically transferring electrical energy from a charging pad to the PED held on the PED holder.

One of the main advantages of the solutions according to the various aspects of the invention is the reduced weight of the in-flight entertainment equipment needed. Since passengers may use their PEDs, costly and sometimes very heavy other displays may be done away with. This will, in turn, reduce costs for airlines operating aircraft with passenger seat arrangements according to the invention.

Advantageous configurations and developments will emerge from the further dependent claims and from the description with reference to the figures.

According to some embodiments of the passenger seat arrangement according to the first aspect of the invention, the PED holder may be embedded within the backrest, the charging pad and the assembly of permanent magnets facing towards a charging surface of the backrest.

According to some further embodiments of the passenger seat arrangement according to the first aspect of the invention, the PED holder may be hinged to the backrest via a hinge. In some embodiments thereof, the PED holder may be implemented as a foldable tray hinged to the backrest. The PED holder may be configured to be folded downwards from a generally upright position so that a charging surface is oriented horizontally for placement of a PED on top of the charging surface of the foldable tray.

According to some further embodiments of the passenger seat arrangement according to the first aspect of the invention, the PED holder may be implemented as an attachment board hinged to a support structure at the back of the backrest and configured to tilt the charging surface of the attachment board to an angle with respect to the support structure.

According to some further embodiments of the passenger seat arrangement according to the first aspect of the invention, the charging pad may be entirely embedded within the PED holder.

According to some further embodiments of the passenger seat arrangement according to the first aspect of the invention, electrically conductive lines for providing electrical energy to the charging pad are fed through wiper contacts within the hinge.

According to some further embodiments of the passenger seat arrangement according to the first aspect of the invention, the PED holder may be formed from an electrically isolation material, in particular polycarbonates.

According to some further embodiments of the passenger seat arrangement according to the first aspect of the invention, the charging pad may include transmitting coil, and a power transmitter having a power converter and a charging controller. The power converter may be configured to transform electric current provided to the charging pad to power the transmitting coil. The charging controller may be configured to control the amount and timing of the transferred electric power in line with the requirements of the PED held on the PED holder.

According to some further embodiments of the passenger seat arrangement according to the first aspect of the invention, the PED holder may have an essentially rectangular flat shape.

According to some embodiments of the passenger aircraft according to the second aspect of the invention, the passenger seat arrangement may have at least two passenger seats arranged beside one another.

The above configurations and developments may be combined with one another as desired where expedient. Further possible configurations, developments and implementations of the invention also encompass combinations, which are not explicitly mentioned, of features of the invention described above or below with regard to the exemplary embodiments. A person skilled in the art here will in particular also add individual aspects as improvements or additions to the respective basic form of the present invention.

### BRIEF SUMMARY OF THE DRAWINGS

The present invention will be discussed in more detail below on the basis of the exemplary embodiments shown in the schematic figures. In the figures:
Fig. 1 shows a side view of a schematic illustration of a passenger seat arrangement for a passenger aircraft according to one embodiment of the invention;
Fig. 2 shows a side view of a schematic illustration of a passenger seat arrangement for a passenger aircraft according to another embodiment of the invention;
Fig. 3 shows a perspective illustration of the backside of a passenger seat arrangement for a passenger aircraft according to another embodiment of the invention;
Fig. 4 shows a schematic illustration of an aircraft having a passenger seat arrangement according to Fig. 1, 2 or 3 according to a further embodiment of the invention; and
Fig. 5 shows a schematic flowchart of the steps of a method for wirelessly supplying energy to a personal electronic device (PED) at a passenger seat arrangement in a passenger aircraft according to a further embodiment of the invention.

The appended figures are intended to provide improved understanding of the embodiments of the invention. They illustrate embodiments and serve, in conjunction with the description, for the explanation of principles and concepts of the invention. Other embodiments, and many of the stated advantages, will emerge with regard to the drawings. The elements of the drawings are not necessarily shown true to scale relative to one another. Direction-indicating terminology such as, for instance, "top", "bottom" "left", "right", "above" "below", "horizontal", "vertical", "front", "rear" and similar indications are used only for explanatory purposes and do not serve to restrict the generality to specific configurations as shown in the figures.

In the figures of the drawing, elements, features and components that are identical, functionally identical and of identical action are denoted in each case by the same reference signs unless stated otherwise.

### DESCRIPTION OF EXEMPLARY EMBODIMENTS

Personal electronic devices (PEDs) in the context of this invention comprise all electronic devices that may be used for entertainment, communication and/or for office use. For example, PEDs can comprise all types of terminal devices, such as laptops, mobile telephones, smartphones, handheld devices, palmtops, tablet PCs, GPS devices, navigation devices, audio devices such as MP3 players, portable DVD or Blu-rays players or digital cameras.

Passenger seats in the context of this invention may comprise any form of structural component parts of a vehicle that are intended to seat a passenger for the duration of the journey using the vehicle. In particular, passenger seats in aircraft may be used personally and at least temporarily exclusively by the aircraft passenger of the aircraft during the flight. Seats or passenger seats in the context of the invention may be aircraft seats divided into seat assemblies, but also loungers, armchairs, beds, suites of first class or business class or similar seating furniture within an aircraft.

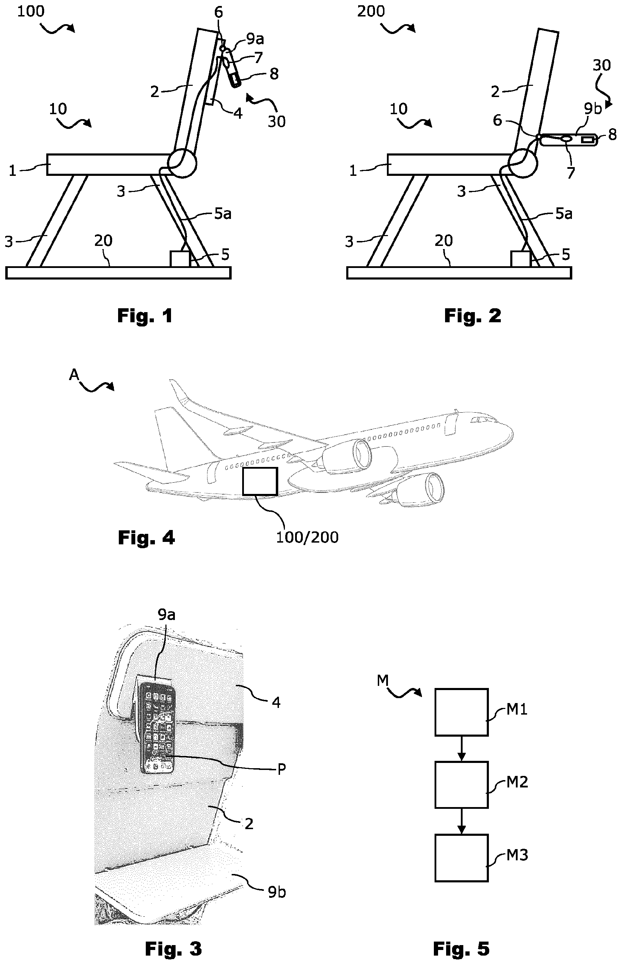

Fig. 1 shows a side view of a passenger seat arrangement 100 in a schematic structure. The passenger seat arrangement 100 may have, for example, a seat assembly 10 in a passenger aircraft, for instance the aircraft A illustrated schematically in Fig. 4. In this case, a passenger aircraft A may comprise various seat assemblies which are fixedly or firmly mounted in a passenger cabin via one or more seat fastening rails 20 running in the passenger cabin floor.

The seat assembly 10 may have one or more passenger seats which have, for example, a seating surface 1 and a backrest 2 articulated to the seating surface 1. In this case, the passenger seats may be arranged, for example, beside one another, that is to say with laterally adjoining seating surfaces, with the result that a plurality of passengers may each occupy one passenger seat in the seat assembly 10 at the same time.

Furthermore, the seat assembly 10 may have a seat supporting frame having front and rear supporting feet 3, respectively, which support and bear the seating surface 1. The seat assembly 10 can be mounted on one or more seat fastening rails 20 in the passenger cabin via the seat supporting frame. In this case, the seat fastening rails 20 may have, for example, a direction in the cabin floor along the longitudinal axis of the passenger aircraft A and, in particular, may run parallel to one another in the case of a plurality of seat fastening rails 20.

Electrical supply lines which can be used to electrically connect one or more electrical energy sources on board the passenger aircraft A to energy supply systems 5 assigned to respective seat assemblies 10 and to supply them with electrical energy may run in or along the seat fastening rails 20. The energy supply systems 5 may be supplied by one or more electrical energy sources (not explicitly illustrated) in the passenger aircraft A. The electrical energy sources may have, for example, one or more AC voltage sources, for example generators - in particular engine generators or generators of ram air turbines. Alternatively or additionally, the electrical energy sources may comprise, for example, DC voltage sources, for instance photovoltaic installations or fuel cells. The electrical energy sources may be electrically coupled to the respective basic modules of the energy supply systems 5 via electrical supply lines which run in or along the seat fastening rails 20.

The energy supply systems 5 may be designed, for example, to supply permanently installed electrical consumers, for instance displays of an on-board entertainment system on board a passenger aircraft, seat lighting systems of passenger seats, seat actuators or the like, as well as temporarily connected electrical consumers, for example PEDs, power banks or similar consumers, which are each assigned to a seat of the passenger seat arrangement 100 and are provided for use by a passenger booked on the respective seat for the duration of a journey.

The energy supply system 5 depicted in Fig. 1 is connected via an electrically conductive line 5a to a wireless charging system 30 integrated into the backrest 2 of the passenger seat assembly 10. For example, the wireless charging system 30 may be entirely embedded within the backrest 2. Alternatively, the wireless charging system 30 may be mounted to or at an outside of the backrest 2, either by

The electrically conductive line 5a leading from the energy supply system 5 to the wireless charging system 30 may be electrically connected to a charging pad 7 of the wireless charging system 30 used to wirelessly transfer electric power to a PED brought into the vicinity of the charging pad 7. The charging pad 7 includes a power transmitter with a generally planar transmitting coil that generates an oscillating magnetic field when driven by an alternating electric current supplied by the energy supply system 5. Any PED that contains a power receiver with a generally planar receiving coil will be subject to electromagnetic induction of varying degree, depending on the geometric relationship in spatial alignment between the transmitting coil and the receiving coil. According to Faraday's law of induction, close spacing of the transmitting coil and the receiving coil will inductively transfer electric power from the transmitting coil to the receiving coil.

The charging pad 7 is embedded into a PED holder 9a that typically has a flat or slightly recessed surface. The surface of the PED holder 9a oriented away from the backrest 2 may be used by a passenger on the seat behind the passenger seat assembly 10 to place a PED P on top of the surface, as exemplarily illustrated in Fig. 3. The charging pad 7 may also have additional functionalities, such as for example providing for near-field communication (NFC) between a PED P and a corresponding communication controller within the PED holder 9a. To that end, the transmitting coil and the receiving coil may for example be NFC-enabled antennae.

In order to properly align the transmitting coil and the receiving coil for a sufficiently efficient wireless power transfer, the PED holder 9a may have an assembly 8 of permanent magnets embedded inside thereof. The assembly 8 of permanent magnets may include any number of magnets placed underneath the surface of the PED holder 9a at selected positions so that a PED P placed on top of the surface of the PED holder 9a will be guided by the magnetic forces exerted by assembly 8 of permanent magnets into substantially proper alignment with the transmitting coil.

The charging pad 7 may include a power transmitter having a power converter and a charging controller (both not explicitly shown in Fig. 1). The power converter is used to properly transform electric current provided by the energy supply system 5 to the charging pad 7 to power the transmitting coil. The charging controller is configured to control the amount and timing of the transferred electric power in line with the requirements of the PED P.

The assembly 8 of permanent magnets may also act to physically hold the PED P in place on top of the charging surface of the PED holder 9a even if the PED holder 9a is tilted at a downwards angle. The PED holder 9a is implemented as an attachment board that may be hinged or latched to a support structure 4 at the back of the backrest 2 via a rotating hinge 6 that allows for tilting the charging surface of the PED holder 9a to various angles with respect to the support structure 4. If the PED holder 9a is not in use, it may be fully folded back into the plane of the backrest 2. If a passenger desires to charge a PED P on top of the charging surface of the PED holder 9a, the PED holder 9a may be folded outwardly to a desired tilting angle ranging from a 90° downwards angle to a 0° horizontal angle. In some cases, the range of the tilting angle may be limited by safety regulations associated with operating the seat arrangement 100/200 in an aircraft so that passengers are not endangered by the orientation of the PED holder 9a during flight. By tilting the PED holder 9a, the passenger may choose a convenient holding position for his/her PED P so that the PED P may be used while it is charged by the charging pad 7.

The PED holder 9a may be made of a plastic or any other electrically isolating material, such as polycarbonates like lexan or macrolon, and may in general have a rectangular flat shape, with or without rounded corners. The size of the PED holder 9a may be larger than a typical smartphone, but it may also be smaller in size than a typical smartphone (as exemplarily illustrated with respect to the PED P of Fig. 3). The PED holder 9a may have a smooth surface and the assembly 8 of permanent magnets as well as the charging pad 7 may be entirely embedded therein.

Fig. 2 shows a side view of a further passenger seat arrangement 200 in a schematic structure. The passenger seat arrangement 200 may have, for example, a seat assembly 10 in a passenger aircraft, for instance the aircraft A illustrated schematically in Fig. 4. In this case, a passenger aircraft A may comprise various seat assemblies which are fixedly or firmly mounted in a passenger cabin via one or more seat fastening rails 20 running in the passenger cabin floor.

The passenger seat arrangement 200 is generally similar to the passenger seat arrangement 100 of Fig. 1, but differs from the passenger seat arrangement 100 in that the PED holder 9b is implemented as a foldable tray hinged to the backrest 2 of the seat assembly 10 via a hinge 6. The PED holder 9b may be folded downwards from a generally upright position so that a charging surface may be generally horizontal for placement of a PED on top of the charging surface of the PED holder 9b. The PED holder 9b may be made of a plastic or any other electrically isolating material, such as polycarbonates like lexan or macrolon, and may in general have a rectangular flat shape, with or without rounded corners. The size of the PED holder 9b may be as large as a typical food tray in an aircraft and may in particular large enough to accommodate a larger type of PED on top of it, such as for example a tablet or notebook with wireless charging functionality. The PED holder 9b may have a smooth surface and the assembly 8 of permanent magnets as well as the charging pad 7 may be entirely embedded therein.

Fig. 5 shows a flowchart of method steps of a method M for wirelessly supplying energy to a PED at a passenger seat arrangement in a passenger aircraft, for example the passenger seat arrangements 100 or 200 explained and shown in connection with Figs. 1, 2 and/or 3. The method M may be carried out, in particular, in a passenger aircraft A having passenger seat arrangements 100 or 200 as explained in connection with Fig. 4.

In a first step M1, a wireless charging system 30 is integrated into the backrest 2 of a passenger seat with a seat supporting frame in a passenger seat assembly 10 of the passenger seat arrangement, such as the passenger seat arrangement 100 of Fig. 1 or the passenger seat arrangement 200 of Fig. 2. In a second step M2, a PED P may be placed on a PED holder 9a, 9b. The PED holder 9a, 9b has an assembly 8 of permanent magnets embedded within the PED holder. The assembly 8 of permanent magnets physically holds the PED P on the PED holder 9a, 9b in place. Finally, in a third step, electrical energy is electromagnetically transferred from a charging pad 7 within the PED holder 9a, 9b to the PED P held on the PED holder 9a, 9b.

In order to improve the stringency of the representation, various features were combined in one or more examples in the detailed description above. However, it should be clear in this case that the description above is only of an illustrative and in no way restrictive nature. It is used to cover all alternatives, modifications and equivalents of the various features and exemplary embodiments. Many other examples will be immediately and directly clear to a person skilled in the art on the basis of his technical knowledge in view of the description above.

The exemplary embodiments were chosen and described in order to be able to represent the principles on which the invention is based and their possible uses in practice in the best possible manner. As a result, experts may optimally modify and use the invention and its various exemplary embodiments for the intended purpose. In the claims and the description, the terms "containing" and "having" are used as neutral concepts for the corresponding term "comprising". Furthermore, use of the terms "a", "an" and "one" is not intended to fundamentally exclude a plurality of features and components described in such a way.

## Claims

1. Passenger seat arrangement (100) for a passenger aircraft (A), comprising:
a passenger seat assembly (10) having at least one passenger seat with a seat supporting frame and a backrest (2); and
a wireless charging system (30) integrated into the backrest (2), the wireless charging system (30) including:
a PED holder (9a; 9b) having an assembly (8) of permanent magnets embedded within the PED holder (9a; 9b) configured to a physically hold a PED (P) on the PED holder (9a; 9b) in place; and
a charging pad (7) configured to electromagnetically transfer power to a PED (P) held on the PED holder (9a; 9b).

2. Passenger seat arrangement (100) according to claim 1, wherein the PED holder (9a; 9b) is embedded within the backrest (2), the charging pad (7) and the assembly (8) of permanent magnets facing towards a charging surface of the backrest (2).

3. Passenger seat arrangement (100) according to claim 1, wherein the PED holder (9a; 9b) is hinged to the backrest (2) via a hinge (6).

4. Passenger seat arrangement (100) according to claim 3, wherein the PED holder (9b) is implemented as a foldable tray hinged to the backrest (2), the PED holder (9b) configured to be folded downwards from a generally upright position so that a charging surface is oriented horizontally for placement of a PED (P) on top of the charging surface of the foldable tray.

5. Passenger seat arrangement (100) according to claim 3, wherein the PED holder (9a) is implemented as an attachment board hinged to a support structure (4) at the back of the backrest (2) and configured to tilt the charging surface of the attachment board to an angle with respect to the support structure (4).

6. Passenger seat arrangement (100) according to one of the claims 3 to 5,
wherein the charging pad (7) is entirely embedded within the PED holder (9a; 9b).

7. Passenger seat arrangement (100) according to one of the claims 3 to 6,
wherein electrically conductive lines (5a) for providing electrical energy to the charging pad (7) are fed through wiper contacts within the hinge (6).

8. Passenger seat arrangement (100) according to one of the claims 3 to 7,
wherein the PED holder (9a; 9b) is formed from an electrically isolation material, in particular polycarbonates.

9. Passenger seat arrangement (100) according to one of the claims 3 to 8,
wherein the charging pad (7) includes a transmitting coil and a power transmitter having a power converter and a charging controller, the power converter being configured to transform electric current provided to the charging pad (7) to power the transmitting coil.

10. Passenger seat arrangement (100) according to claim 9, wherein the charging controller is configured to control the amount and timing of the transferred electric power in line with the requirements of the PED (P) held on the PED holder (9a; 9b).

11. Passenger seat arrangement (100) according to one of the claims 3 to 10,
wherein the PED holder (9a; 9b) has an essentially rectangular flat shape.

12. Passenger aircraft (A) comprising at least one passenger seat arrangement (100; 200) according to one of claims 1 to 11.

13. Passenger aircraft (A) according to claim 12, further comprising at least one electrical energy source and at least one energy supply system (5) associated with the at least one passenger seat arrangement (100; 200), the at least one energy supply system (5) configured to drive the charging pad (7) of the wireless charging system (30) with electric current.

14. Passenger aircraft (A) according to claim 12 or 13, wherein the at least one energy supply system (5) is connected via an electrically conductive line (5a) to the wireless charging system (30).

15. Method (M) for wirelessly supplying energy to a PED (P) at a passenger seat arrangement (100; 200) in a passenger aircraft (A), the method (M) comprising:
integrating (M1) a wireless charging system (30) into the backrest (2) of a passenger seat with a seat supporting frame in a passenger seat assembly (10) of the passenger seat arrangement (100; 200);
placing (M2) a PED (P) on a PED holder (9a; 9b) having an assembly (8) of permanent magnets embedded within the PED holder (9a; 9b), physically holding the PED (P) on the PED holder (9a; 9b) in place; and
electromagnetically transferring (M3) electrical energy from a charging pad (7) to the PED (P) held on the PED holder (9a; 9b).
